# EUROPEAN PATENT APPLICATION

(11) **EP 4 137 285 A2**
(43) Date of publication of application: **22.02.2023**
(21) Application number: 22000195.2
(22) Date of filing: 12.08.2022
(51) Int. Cl.: B29B 9/12, B29B 9/06, B29B 7/72, B29B 7/82, B29B 7/92, B29B 7/42, B29B 7/48

(54) **METHOD FOR PREPARING A BIODEGRADABLE POLYMERIC COMPOSITION COMPRISING THERMOPLASTIC STARCH AND A SYNTHETIC BIODEGRADABLE POLYMER**

(30) Priority: 20.08.2021 PL 43878821
(71) Applicant: Grupa Azoty S.A., 33-101 Tarnow (PL)
(72) Inventor: Pantol, Magdalena, 33-100 Tarnów (PL); Jasnosz, Józef, 33-140 Lisia Góra (PL); Szostak, Sebastian, 33-101 Tarnów (PL); Kawa, Dorota, 33-111 Koszyce Male (PL); Wludarczyk, Artur, 32-720 Nowy Wisnicz (PL); Kantor, Lukasz, 32-031 Mogilany (PL)
(74) Representative: Krawczyk, Lilianna

(57) **Abstract**

Method for preparing a biodegradable polymeric composition, comprising thermoplastic starch and a synthetic biodegradable polymer in the amount not exceeding 50% by weight selected from the group consisting of: butyl terephthalate adipate co-polyester, poly(vinyl alcohol), the method characterized in that it includes the following steps: (a) stirring starch and at least one plasticiser in a double ribbon mixer-crusher to obtain a thermoplastic starch premix; (b) extruding the thermoplastic starch premix obtained in step (a) at the temperature in the range of 100°C - 165°C to obtain a starch extrudate; (c) cooling the starch extrudate with air; (d) granulating the air-cooled starch extrudate; (e) extruding the starch granulate with the synthetic biodegradable polymer granulate. The biodegradable polymeric composition is characterized in that it comprises 80% - 99.5% of thermoplastic starch relative to butyl terephthalate adipate co-polyester or poly(vinyl alcohol) or a mixture thereof, wherein the mass ratio of synthetic polymers in the mixture is in the range of 20:1 - 1:20. Further disclosed is the use of the biodegradable polymeric composition in granulate form for preparing filaments for 3D printing.

## Description

The object of the present invention is a method for preparing a biodegradable polymeric composition comprising thermoplastic starch and a synthetic biodegradable polymer, particularly polybutylene adipate terephthalate (PBAT) and/or poly(vinyl alcohol) (PVA), as well as the biodegradable polymeric composition prepared with natural fibres for three-dimensional (3D) printing applications in FFF technology. The content of these additives is in the range of 1-95%.

Plasticised starch is a raw material for thermoplastic starch extrusion. It is obtained in a process that consists in subjecting native starch to crushing and mixing forces at elevated temperature with water vapour discharge. Mixing with kneading takes place in the presence of a plasticiser or several plasticisers in a suitably selected composition of plasticisers. The plasticisation of starch causes its transition to an amorphous state and a reduction of susceptibility to moisture absorption. As a processing material, thermoplastic starch can be used in a very limited range of applications due to its high hygroscopicity and other physicochemical parameters. Therefore, new solutions in the field of starch modification are still being sought, e.g., using polymeric additions that predispose starch to be used in injection and blow moulding processing, primarily in 3D printing technology.

Biodegradable polymers in 3D printing are primarily used in fields such as design, arrangement and printing of materials of temporary usefulness.

Poly(vinyl alcohol) is a well-known polymer that is used as an additive for adhesives, varnishes, textile coatings, as well as in pharmacy. Due to its physicochemical properties, it is classified as a semi-biodegradable synthetic polymer that is soluble in water and glycerol.

Polybutylene adipate terephthalate, otherwise known as butyl terephthalate adipate copolyester, is a biodegradable polymer with a random monomer sequence resulting from the copolymerisation of adipic acid, 1,4-butanediol and terephthalic acid, having a relatively low processing temperature and high compatibility with biopolymers. It is used primarily in biodegradable compositions that require flexibility.

In the art, there are many technological solutions relating to the method for preparing thermoplastic starch, however, a relatively small number of them relates to a thermoplastic starch composition with biodegradable polymer additives.

Patent application P.433862 discloses a method for preparing thermoplastic starch and the thermoplastic starch, which is characterized by a fully amorphous structure, a softening point of about 100°C and a disintegration temperature of 300°C. Thermoplastic starch obtained according to the invention is an excellent base for injecting, extruding, thermoforming and blowing applications, as well as for producing filaments used in three-dimensional printing in FFF (FDM) technology. The method for preparing starch includes the steps of: mixing starch and at least one plasticiser in a mixer to obtain a thermoplastic starch premix, extruding the obtained thermoplastic starch premix to obtain a starch extrudate, cooling the starch extrudate with air, and optionally granulating the air-cooled starch extrudate, characterized in that the extrusion step immediately follows the mixing step without a conditioning step. The method preferably includes mixing and kneading native starch with a plasticiser or plasticiser composition selected from the group consisting of citric acid, water, glycerine, and sorbitol in a double ribbon horizontal mixer-crusher at 60-120°C for 1-9h with a stirrer speed of 60-150 rpm. The starch premix obtained after extrusion and immediately after mixing is loose and devoid of most water, which enables easier dosing and further processing on an industrial scale. Further, the use of citric acid additive has beneficially influenced the granulate plasticity and the hygroscopicity and structure of the final product.

EP2046885 B1 discloses a biodegradable polymeric composition suitable for injection moulding and the injection moulding product made of a resin composition comprising, based on dry mass, from 45 to 85% w/w of starch and/or modified high-amylose starch, from 2 to 15% w/w of a water-soluble polymer (e.g., PVA) and from 5 to 45% w/w of polyol plasticiser mixture and from 0.5 to 60% w/w of filler. The method for preparing the biodegradable composition consists of mixed extrusion using concurrent or counter-rotating two-screw extruders or selected constructs of single-screw extruders.

In turn, EP2569363 B1 discloses biodegradable, self-sealing pellets that foam under the influence of radiation and comprise starch substantially free from native crystallinity. Pellets as plastic are preferably obtained in the extrusion process by mixing starch with at least one other polymer of synthetic (e.g., PVA) or natural origin and water. The extrusion temperature ranges from 30 to 120°C, with cutting speed at the nozzle outlet from 20 to 700 s⁻¹.

EP2727952 B1 relates to thermoplastic starch, a biodegradable composite material, and a method for its preparation that includes the formation of a biodegradable prepolymer comprising an active end group in a condensation polymerization reaction between a biodegradable polyester monomer and a reaction activator, followed by a starch reaction with an active end group of a biodegradable prepolymer to produce a grafted polyester-TPSA (thermoplastic starch) copolymer.

The TPS processing temperature is between 50 and 150°C, and the extrusion temperature of the finished composite material is between 20 and 220°C. Biodegradable polyester monomers involved in condensation polymerisation include hydroxyl acid, diacid, or diol, while prepolymers are selected from the group consisting of poly(lactic acid) (PLA), poly(butylene succinate) (PBS), poly(butylene succinate-co-adipate) (PBSA), and polybutylene adipate terephthalate (PBAT).

PL/EP1745097 T3 describes a method for producing a polymeric extrudate or a moulded piece that consists in mixing extruded thermoplastic starch and extruded thermoplastic PVA followed by extrusion at the temperature in the range of 160°C to 190°C. The thermoplastic starch used is starch that has been produced by the extrusion process using essentially dry starch comprising no more than 5% moisture, processed at elevated temperature with a bulking agent or plasticiser such as glycerol or sorbitol. Additionally, a moulding piece and polymeric extrudate, consisting primarily of thermoplastic starch and PVA, produced by injection moulding is disclosed.

EP2007831 B1 discloses a gas barrier film formed from a biodegradable polymeric composition comprising, in the dry state, starch (45-90% w/w), a water-soluble polymer (0.1-15% w/w) selected from poly(vinyl alcohol), poly(vinyl acetate) and ethylene-vinyl alcohol copolymers, and a plasticiser (5-45% w/w). Polymeric compositions are produced by mixed extrusion using concurrent or counter-rotating double screw extruders or selected single-screw extruder designs.

Prior art documents, including the solutions described above, do not disclose methods for preparing a biodegradable polymeric composition based on thermoplastic starch with the addition of a synthetic polymer, and in particular with the addition of poly(vinyl alcohol) (PVA) and/or polybutylene adipate terephthalate (PBAT) and its industrial use as a filament in 3D printing.

The analysis of the market needs based on the available reports clearly shows the constantly growing demand for biodegradable products that primarily comprise polymers of natural origin. Therefore, the object of the present invention is to develop a method for preparing a biodegradable polymeric composition based on thermoplastic starch for the production of filament for 3D printing technology.

The method for preparing a biodegradable polymeric composition according to the invention, comprising thermoplastic starch and a synthetic biodegradable polymer in an amount not exceeding 50% by weight selected from the group consisting of: butyl terephthalate adipate copolyester, poly(vinyl alcohol), the method being characterized in that it includes the following steps:
a. mixing starch and at least one plasticiser in a double ribbon horizontal mixer-crusher to obtain a thermoplastic starch premix;
b. extruding the thermoplastic starch premix obtained in step a. at the temperature in the range of 100-165°C to obtain a starch extrudate;
c. cooling the starch extrudate with air;
d. granulating the air-cooled starch extrudate;
e. extruding the starch granulate with the synthetic biodegradable polymer granulate.

Alternatively and preferably, the method of the invention is characterized in that the step of dispensing synthetic biodegradable polymer granulate is realised during step b. of extruding starch premix instead of step e., the method including the following steps:
a. mixing starch and at least one plasticiser in a double ribbon horizontal mixer-crusher to obtain a thermoplastic starch premix;
b. extruding the thermoplastic starch premix obtained in step a. at the temperature in the range of 100-165°C to obtain a starch extrudate, wherein at this stage granulate of a synthetic biodegradable polymer is fed using a side feeder;
c. cooling the filled starch extrudate with air;
d. granulating the air-cooled polymeric extrudate.

Preferably, the granulate of the synthetic biodegradable polymer is a powder.

Preferably, the plasticiser is selected from the group consisting of 99.5% glycerine and citric acid.

The biodegradable polymeric composition prepared using the method of the invention is characterized in that it comprises 80%-99.5% of thermoplastic starch relative to the butyl terephthalate adipate copolyester.

The biodegradable polymeric composition prepared using the method of the invention is characterized in that it comprises 80%-99.5% of thermoplastic starch relative to poly(vinyl alcohol).

The biodegradable polymeric composition prepared using the method of the invention is characterized in that it comprises 80%-99.5% of thermoplastic starch and 0.5-20% of a mixture of poly(vinyl alcohol) and butyl terephthalate adipate copolyester, wherein the mass ratio of synthetic polymers in the mixture is in the range of 20:1-1:20.

The object of the invention is also the use of the biodegradable polymeric composition according to the invention in the form of granulate to prepare 3D printing filaments.

Preferably, 3D printing is carried out in FFF technology.

Thus, the object of the invention is a method for preparing a polymeric composition based on thermoplastic starch with the addition of a synthetic polymer in an amount not exceeding 50% by weight relative to the total weight of the polymer, including the steps of:
a. mixing starch and at least one plasticiser in a double ribbon horizontal mixer-crusher to obtain a thermoplastic starch premix;
b. extruding the thermoplastic starch premix obtained in step a. to obtain a starch extrudate;
c. cooling the starch extrudate with air;
d. granulating the air-cooled starch extrudate,
e. extruding the starch granulate with synthetic biodegradable polymer granulate.

In an alternative variant of the method of the invention, steps follow one another in the following order:
a. mixing starch and at least one plasticiser in a double ribbon horizontal mixer-crusher to obtain a thermoplastic starch premix;
b. extruding the thermoplastic starch premix obtained in step a. to obtain a starch extrudate, wherein at this stage synthetic biodegradable polymer granulate is simultaneously fed using a side feeder;
c. cooling the filled starch extrudate with air;
d. granulating the air-cooled polymeric extrudate.

The basis for the composition is a thermoplastic starch prepared according to the application P.433862. Thermoplastic starch contains 2% of water, max., while plasticized starch has a water content of 5%, max. All stages follow one another. It is possible to extrude the composition using thermoplastic starch granulate or a premix, i.e., fully amorphous plasticised starch. Extrusion is carried out in a single or double-screw extruder at a temperature within the range of 100-165°C, depending on the synthetic polymer additive used and its amount. The extrudate is cooled with air and then granulated. The granulate composition is a raw material for filament extrusion for 3D printing.

The object of the invention is also a biodegradable polymeric composition based on thermoplastic starch with the addition of a synthetic polymer in an amount not exceeding 50% by weight relative to the total weight of the polymer, and its industrial use as a filament in 3D printing.

Additive manufacturing technologies (AMT) represent a group of modern production methods commonly used in engineering for rapid production of geometrically complex models and prototypes, as well as precise elements directly from 3D-CAD models. One of the most popular incremental technologies, i.e., the FDM/FFF technology, consists in creating details by applying, layer by layer, a molten filament, plastic, thus connecting them with the previous layers of detail until the full height of the model is achieved. The use of incremental technologies is an excellent solution when it is necessary to create a prototype of a detail, but the production of a casting mould is not economically justified. Creating (printing) a functional prototype from the construction material meant to be ultimately used in injection moulding technology substantially reduces the costs of ongoing projects and also shortens the duration of the project. Application (functional), accreditation tests can be carried out on a detail printed in 3D technology. Prototyping and 3D printing accelerates the development of materials. Incremental technologies are used in small-scale production, in which the cost of constructing and creating injection moulds is too high for structural plastics mainly applied in:
- automotive industry: details under the hood;
- protective and supportive sports equipment;
- medical braces, prostheses, orthoses;
- high-quality functional or structural parts;
- mock-ups, architectural models;
- functional tests;
- preoperative models and phantoms.

The use of biodegradable polymer in 3D printing technology is a solution, e.g., in architecture, mock-up design, prototypes, etc.

### Embodiments of granulates for the preparation of filaments

The invention is presented in the following embodiments, which are not limiting in any way and are intended only to illustrate the invention.

In embodiments of the method, an ERWEKA double ribbon horizontal mixer-crusher and an Axon Bx25 single-screw extruder equipped with an Axon BDB-G granulator and a Maris TM30 MW40D double-screw extruder equipped with a Meccanoolastica T10 granulator are used.

The starch used in the methods of the invention is purchased from ZETPEZET in Pila, while 99.5% glycerine and citric acid (produced by TechlandLab, Tarnobrzeg) were used as plasticisers.

The base of biodegradable polymeric compositions of the invention is the thermoplastic starch that is the object of application P.433862, the contents of which are herein incorporated by reference in their entirety.

### Example 1

Method 1: preliminary step - preparing a so-called starch premix according to the invention P.433862, wherein native starch is mixed with plasticisers. Starch and plasticiser (preferably glycerine and citric acid) are placed simultaneously in a double ribbon horizontal mixer-crusher heated to the temperature of 60 to 120°C equipped with a heating mantle, regulation of rotation and vapour discharge. Mixer rotation speed should be set at a speed of 60-150 rpm. The weight ratio of starch to plasticiser or mixture of plasticisers ranges from 2:1 to 20:1 and it is important that the liquid plasticiser, i.e., glycerine or water, does not exceed 30% and is not less than 5% of the total content. The mixture in suitable proportions should be subjected to mixing and crushing forces of the mixer for a period of 1h-7h, depending on the type and amount of plasticiser used. The mixture prepared as described in P.433862 is ready for immediate extrusion. The preliminary step is directly followed by the proper step i.e., extrusion of the obtained starch premix with PVA in the 1:1 ratio. The starch premix and poly(vinyl alcohol) are fed to the single or double-screw extruder using gravimetric feeders. The extrusion of the composition takes place at the temperature of 170-250°C. The extrudate is cooled with air and then granulated. The granulate is the final product of the process intended for filament extrusion for 3D printing technology.

### Example 2

Method 2: Thermoplastic starch granulate obtained by extruding a starch premix according to P.433862 is fed gravimetrically to a single or double-screw extruder and simultaneously in the process, poly(vinyl alcohol) in the form of crystals is fed using a gravimetric feeder. The weight ratio of the starch premix to PVA according to the example is 1:1. The extrusion is carried out at the temperature of 170-250°C. The extrudate is cooled with air or water and then granulated. The granulate is the final product of the process intended for filament extrusion for 3D printing technology.

### Example 3

The polymeric composition obtained from a starch premix prepared according to the invention P.433862 in the amount of 90% by weight relative to polybutylene adipate terephthalate (PBAT) is extruded in a double-screw extruder with the copolymer dispensed using a side feeder, while maintaining the following temperatures in the subsequent heating zones: 40/100/125/125/125/120/120/120/120/120, at a screw rotation speed of 120 rpm. The extrudate is cooled by air blast and fed to the granulator. The resulting composition is an excellent material for extruding filaments for 3D printing.

### Example 4

Thermoplastic starch granulate in the amount of 90% by weight relative to a polymeric additive, prepared according to the invention P.433862, is mixed with PBAT and extruded using a single-screw extruder, while maintaining the following temperatures in the subsequent heating zones: 110/130/132/132/132/130, at a screw rotation speed of 70 rpm. The extrudate is cooled by air blast and fed to the granulator. The resulting composition is an excellent material for extruding filaments for 3D printing.

### Example 5

The polymeric composition obtained from a starch premix prepared according to the invention P.433862 in the amount of 50% by weight relative to poly(vinyl alcohol) (PVA) is extruded in a double-screw extruder with PVA dispensed using a side feeder, while maintaining the following temperatures in the subsequent heating zones: 40/110/160/160/165/160/155/155/155/155, at a screw rotation speed of 120 rpm. The extrudate is cooled by air blast and fed to the granulator. The granulate is a raw material for filament extrusion for 3D printing.

### Example 6

The polymeric composition obtained from a starch premix prepared according to the invention P.433862 in the amount of 70% by weight relative to poly(vinyl alcohol) (PVA) is extruded in a double-screw extruder with PVA dispensed using a side feeder, while maintaining the following temperatures in the subsequent heating zones: 40/110/160/160/165/160/155/155/155/155, at a screw rotation speed of 120 rpm. The extrudate is cooled by air blast and fed to the granulator. The granulate is a raw material for filament extrusion for 3D printing.

### Example 7

A starch premix according to the invention P.433862 is prepared in a double ribbon horizontal mixer-crusher and then mixed with fine-grained PVA in the 1:1 mass ratio and extruded in a single-screw extruder, while maintaining the following temperatures in the subsequent heating zones: 110/145/150/155/150/145, at a screw rotation speed of 75 rpm. The extrudate is cooled with air blast or water and then fed to the granulator. The granulate is a raw material for filament extrusion for 3D printing.

### Example 8

A starch premix according to the invention P.433862 is prepared in a double ribbon horizontal mixer-crusher and then mixed with PVA in the 5:1 mass ratio and extruded in a double-screw extruder, while maintaining the following temperatures in the subsequent heating zones: 40/110/160/160/165/160/155/155/155/155, at a screw rotation speed of 125 rpm. The extrudate is cooled with air blast or water and then fed to the granulator. The granulate is a raw material for filament extrusion for 3D printing.

### Example 9

A starch premix according to the invention P.433862 is prepared in a double ribbon horizontal mixer-crusher and then mixed with PBAT and PVA, while maintaining the following mass ratios: 85% of thermoplastic starch, 15% of the PVA and PBAT mixture, whereas the mass ratio of synthetic polymers in the mixture is 1:2, and is extruded in a double-screw extruder, while maintaining the following temperatures in the subsequent heating zones: 40/100/125/125/125/120/120/120/120/120, at a screw rotation speed of 125 rpm. The extrudate is cooled with air blast or water and then fed to the granulator. The granulate is a raw material for filament extrusion for 3D printing.

### Example 10

Thermoplastic starch granulate prepared according to the invention P.433862 is mixed with PBAT and PVA, while maintaining the following weight ratios: 80% of thermoplastic starch, 10% of the PVA and PBAT mixture, whereas the mass ratio of synthetic polymers in the mixture is 2:1, and extruded in a single-screw extruder, while maintaining the following temperatures in the subsequent heating zones: 110/130/132/132/132/130, at a screw rotation speed of 75 rpm. The extrudate is cooled by air blast and fed to the granulator. The granulate is a raw material for filament extrusion for 3D printing.

### Embodiments of filaments for FFF technology applications

Granulates for the production of biodegradable filaments prepared according to the embodiments above are then subjected to a filament extrusion process.

The filament is manufactured using a single-screw extruder with a specific screw configuration (mixing and degassing zones) to ensure optimal homogenization of the mixture and stable feeding of the polymer alloy to the boring head. The parameters of the extruder screw, i.e., L/D, D/dᵢ, the screw springs are selected according to the requirements of a given polymer.

The granulate for filament production is dried in an air dehumidifier or vacuum dryer at 70 °C for 4-12 h, then the granulate is cooled. The granulate prepared in this way is fed to the main hopper of the extruder, then plasticized and homogenized inside the extruder cylinder. The plasticised polymeric mass passes through a boring head with a matrix that allows to obtain a filament of 1.75 mm or 2.85 mm diameter, which is then cooled using an air knife while passing through the air sections at the end. The filament is produced in such a way as to maintain a constant diameter along the entire length, ensuring accurate 3D printing.

The extrusion parameters, including the screw design with return elements between the front transfer elements, are used for better homogenization without generating a strong shear.

In embodiments, the following filament extrusion conditions are utilised:
Screw diameter: 32 mm; zone 1: 145°C, zone 2: 160°C, zone 3: 160°C, zone 4: 160°C, zone 5: 160°C, zone 6: 160°C; head: 160°C; rotation speed of the extruder screw: 20 RPM.

The filament thus obtained is then air-cooled and wound on spools weighing 2 kg, 8 kg, 20 kg.

### Example 11

The composition of a filament made of biodegradable material based on thermoplastic starch:

| Component category | Component | Percentage |
|---|---|---|
| Thermoplastic starch | A starch premix prepared according to the invention P.433862 | 50% |
| Synthetic biodegradable polymer | PVA | 50% |

Target properties of an example of a filament of biodegradable material based on thermoplastic starch, values marked on the filament:
Tensile Strength: 12 MPA;
Relative elongation at break: 25%.

### Example 12

The composition of a filament made of elastic biodegradable material based on thermoplastic starch:

| Component category | Component | Percentage |
|---|---|---|
| Thermoplastic starch | Thermoplastic starch prepared according to the invention P.433862 | 90% |
| Synthetic biodegradable polymer | PBAT | 10% |

Target properties of an example of a filament of biodegradable material based on thermoplastic starch, values marked on the filament:
Tensile Strength: 21.5 MPA;
Relative elongation at break: 7%.

### Example 13

The composition of a filament made of biodegradable material with improved strength based on thermoplastic starch:

| Component category | Component | Percentage |
|---|---|---|
| Thermoplastic starch | Thermoplastic starch prepared according to the invention P.433862 | 10- 90% |
| Synthetic biodegradable polymer | PBAT | 0- 10% |
| Filler | Magnesium silicate and/or Calcium carbonate | 5- 20% |
| | | 5- 20% |

Target properties of an example of a filament of biodegradable material based on thermoplastic starch, values marked on the filament:
Tensile Strength: 31.5 MPA;
Relative elongation at break: 5%.

### Example 14

The composition of a filament made of biodegradable material comprising natural filler based on thermoplastic starch:

| Component category | Component | Percentage |
|---|---|---|
| Thermoplastic starch | Thermoplastic starch prepared according to the invention P.433862 | 10- 90% |
| Synthetic biodegradable polymer | PBAT | 0- 10% |
| Filler | Natural fibres | 5- 20% |

The addition of fillers of natural origin, i.e., cellulose fibres, wood fibres and powders, rice husks to the composition provides an aesthetic surface and texture finish while reducing the cost of the composition, provides dimensional stability and improves the retaining of crystallisation of the base polymer. Wood fibres and sawdust are also used as a universal filler.

Examples describe the preparation of a filament of biodegradable material based on thermoplastic starch. This formula provides a filament of adequate plasticity and strength for general purpose filaments that can be used for three-dimensional printing of any functional element in hobby and design printing.

## Claims

1. A method for preparing a biodegradable polymeric composition comprising thermoplastic starch and a synthetic biodegradable polymer in an amount not exceeding 50% by weight selected from the group consisting of: butyl terephthalate adipate copolyester, poly(vinyl alcohol), the method is **characterized in that** it includes the following steps:
a. mixing starch and at least one plasticiser in a double ribbon horizontal mixer-crusher to obtain a thermoplastic starch premix;
b. extruding the thermoplastic starch premix obtained in step a. at the temperature in the range of 100-165°C to obtain a starch extrudate;
c. cooling the starch extrudate with air;
d. granulating the air-cooled starch extrudate;
e. extruding the starch granulate with the synthetic biodegradable polymer granulate.

2. The method according to claim 1, **characterized in that** the step of dispensing synthetic biodegradable polymer granulate is realised during step b. of extruding starch premix instead of step e., the method including the following steps:
a. mixing starch and at least one plasticiser in a double ribbon horizontal mixer-crusher to obtain a thermoplastic starch premix;
b. extruding the thermoplastic starch premix obtained in step a. at the temperature in the range of 100-165°C to obtain a starch extrudate, wherein at this stage granulate of a synthetic biodegradable polymer is fed using a side feeder;
c. cooling the filled starch extrudate with air;
d. granulating the air-cooled polymeric extrudate.

3. The method according to claim 1 or 2, **characterised in that** the granulate of the synthetic biodegradable polymer is a powder.

4. The method of any one of claims 1 to 3, **characterised in that** the plasticiser is selected from the group consisting of 99.5% glycerine and citric acid.

5. A biodegradable polymeric composition prepared using the method as described in any one of claims 1 to 4, **characterized in that** it comprises 80%-99.5% of thermoplastic starch relative to the butyl terephthalate adipate copolyester.

6. The biodegradable polymeric composition prepared using the method as described in any one of claims 1 to 4, **characterized in that** it comprises 80%-99.5% of thermoplastic starch relative to poly(vinyl alcohol).

7. The biodegradable polymeric composition prepared using the method as described in any one of claims 1 to 4, **characterized in that** it comprises 80%-99.5% of thermoplastic starch and 0.5-20% of a mixture of poly(vinyl alcohol) and butyl terephthalate adipate copolyester, wherein the mass ratio of synthetic polymers in the mixture is in the range of 20:1-1:20.

8. Use of the biodegradable polymeric composition as described in any one of claims 5 to 7 in the granulate form for preparing filaments for 3D printing.

9. The use according to claim 8, **characterized in that** 3D printing is carried out in FFF technology.
